(19) Europäisches Patentamt
European Patent Office
Office européen des brevets

(11) Veröffentlichungsnummer: **0 039 481**
**A1**

# (12) EUROPÄISCHE PATENTANMELDUNG

(21) Anmeldenummer: **81103256.4**

(22) Anmeldetag: **30.04.81**

(51) Int. Cl.³: **C 01 B 21/093**

(30) Priorität: **05.05.80 DE 3017172**

(43) Veröffentlichungstag der Anmeldung: **11.11.81**
**Patentblatt 81/45**

(84) Benannte Vertragsstaaten: **BE DE FR GB IT NL**

(71) Anmelder: **HOECHST AKTIENGESELLSCHAFT,**
**Postfach 80 03 20, D-6230 Frankfurt/Main 80 (DE)**

(72) Erfinder: **Rieck, Hans-Pieter, Dr.,**
**Freiherr-vom-Stein-Strasse 37, D-6233 Kelkheim (Taunus) (DE)**
Erfinder: **Russow, Jürgen, Dr., Am Schieferberg 45,**
**D-6233 Kelkheim (Taunus) (DE)**
Erfinder: **Semmler, Hans-Joachim, Dr.,**
**Schwedenstrasse 41, D-6203 Hochheim am Main (DE)**

## (54) Verfahren zur Herstellung von Ammonium-nitrilo-trisulfonat.

(57) Ammonium-nitrilo-trisulfonat lässt sich gewinnen, wenn Stickoxide in eine wässrige Ammoniumsulfit-Lösung bei pH-Werten von 5,0 bis 7,5 eingeleitet werden. Die Lösung soll in suspendierter Form mindestens 20 g/l des gewünschten Produkts enthalten.

EP 0 039 481 A1

0039481

HOECHST AKTIENGESELLSCHAFT HOE 80/F 086 Dr.SP/cr

# Verfahren zur Herstellung von Ammonium-nitrilo-trisulfonat

Die vorliegende Erfindung betrifft ein Verfahren zur Herstellung von Ammonium-nitrilo-trisulfonat aus Ammoniak, Schwefeldioxid und nitrosen Gasen.

Aus der DE-AS 17 67 201 ist bereits ein Verfahren zur Herstellung von Ammonium-nitrilo-trisulfonat bekannt, bei dem man eine wässrige, ammoniakalische Ammoniumsulfit-Lösung bei einem pH-Wert zwischen 5,0 und 7,5 mit gasförmigen Stickoxiden bei erhöhter Temperatur umsetzt. Das gebildete Ammoniumsalz der Nitrilotrisulfonsäure, das noch durch etwas Ammonium-imidodisulfonat und Ammonium-sulfamat verunreinigt ist, wird abgetrennt. Nachteilig an diesem Verfahren ist, daß große Apparate nötig sind um kleine Mengen Nitrilo-trisulfonat zu erhalten, daß große Mengen Flüssigkeit filtriert werden müssen und daß feine Nitrilo-trisulfonat-Kristalle auch nach der Abtrennung des Niederschlags und der Apparatur auskristallisieren können.

Es bestand daher die Aufgabe, ein Verfahren zur Herstellung von Ammonium-nitrilo-trisulfonat zu finden, **nach dem sich** auch große Mengen bei geringem apparativen Aufwand und geringem Reaktorvolumen herstellen lassen. Das Verfahren sollte insbesondere die Möglichkeit der kontinuierlichen Durchführung bieten und auch für Schwefeldioxid- und Stickoxid-Abgase mit schwankendem Gehalt verwendet werden können.

Es wurde nun ein Verfahren zur Herstellung von Ammonium-nitrilo-trisulfonat durch Einleiten von Stickoxiden in eine wässrige Ammoniumsulfit-Lösung bei pH-Werten von 5,0 bis 7,5 gefunden, das dadurch gekennzeichnet ist, daß man die Stickoxide in eine Lösung einleitet, die in suspendierter Form bereits mindestens 20 g/l Ammonium-nitrilo-trisulfonat enthält.

Als gasförmige Stickoxide lassen sich auch stickoxidhaltige Abgase einsetzen, insbesondere solche aus der Salpetersäureherstellung.

Der Oxidationsgrad der eingesetzten stickoxidhaltigen Gase soll vorzugsweise im Bereich zwischen 30 und 60 % liegen. Für eine optimale Ausbeute an Nitrilotrisulfonat wird man den Oxidationsgrad durch Zugabe von Sauerstoff bzw. Stickstoffmonoxid auf diesen Bereich einstellen.

Unter Oxidationsgrad (Angabe in %) versteht man das Molverhältnis $NO_2 \cdot 100 : (NO + NO_2)$. Ein höherer Oxidationsgrad führt zu unerwünschter Bildung von Ammoniumsulfat und Ammoniumnitrat.
Die Reaktion kann bei Temperaturen von 0 bis 80°C durchgeführt werden. Bei höheren Temperaturen werden die Ausbeuten an Trisulfonat infolge zunehmender Hydrolyse rasch geringer. Bei Temperaturen um 0°C ist die Löslichkeit von Ammoniumsulfit gering, so daß es zur Ausfällung von Sulfit kommen kann. Bevorzugt ist eine Reaktionstemperatur zwischen 30 und 70°C sowie ein pH-Bereich von 6.0 bis 7.0.
Weil beim erfindungsgemäßen Verfahren weniger wässriges Lösungsmittel abfiltriert werden muß, sind auch keine gesonderten Kristallisationsgefäße notwendig, so daß große Raum-Zeit-Ausbeuten erzielt werden können. Es ist ferner überraschend, daß trotz der Gegenwart erhöhter Mengen von Ammonium-nitrilo-trisulfonat die mit der Synthese konkurrierende Hydrolyse des Trisulfonats zu Imidodisulfonat und Sulfat nicht zunimmt.

Es ist durch einfache Verfahrensschritte möglich, das ausgefallene Nitrilotrisulfonat in dem Maß aus der Suspension zu entfernen, wie es neu gebildet wird, so daß eine stationäre Konzentration aufrecht erhalten wird. Vorzugsweise kann man kontinuierlich Suspension entfernen, daraus das feste Nitrilotrisulfonat ganz oder teilweise abtrennen und die Mutterlauge ganz oder teilweise in das Reaktionsgefäß zurückführen. Beispielsweise kann man die Gase in ein kühlbares Rührgefäß einleiten und am Boden die zu filtrierende Suspension entnehmen. Dabei ist es vorteilhaft, wenn die Einleitung der Nitrose an einer tiefen Stelle des Gefäßes erfolgt.

Man kann auch so verfahren, daß man - selbst wenn der Gehalt an festem Nitrilotrisulfonat unter 20 g/l liegt - kontinuierlich Suspension aus dem Reaktionsgefäß entnimmt, man von einem Teil der entnommenen Suspension das ausgefallene Nitrilotrisulfonat vollständig entfernt und man die entstehende Mutterlauge vollständig oder teilweise mit dem restlichen Teil der entnommenen Suspension vereint und anschließend wieder in das Reaktionsgefäß zurückführt. Damit wird erreicht, daß in der zurückgeführten Lösung stets suspendiertes Nitrilo-trisulfonat vorhanden ist.

Im Falle einer kontinuierlichen Verfahrensdurchführung wird man kontinuierlich frische Ammoniumsulfit-Lösung in dem Maße nachsetzen oder neues Ammoniumsulfit in der Suspension erzeugen, wie Ammoniumsulfit durch die Reaktion verbraucht wird, die sich formal durch die folgende Gleichung beschreiben läßt

$$N_2O_3 + 6NH_4HSO_3 \longrightarrow 2N(SO_3NH_4)_3 + 3H_2O$$

Bei längeren Reaktionszeiten kann es darüberhinaus sinnvoll sein, einen Teil der Reaktionslösung auszuschleusen und durch frische Ammoniumsulfitlösung zu ersetzen, damit der Gehalt an Verunreinigungen (Sulfat, Nitrat, Disulfonat) die durch Nebenreaktionen entstehen, begrenzt wird. Dabei

reicht es auch bei längeren Reaktionszeiten aus, pro Kilogramm abgetrenntem Nitrilotrisulfonat bis zu 5 l Mutterlauge aus dem Reaktionskreislauf zu entfernen.

Bei der Abtrennung des festen Nitrilotrisulfonats muß besonders wenig Mutterlauge filtriert werden, wenn man zuvor die entnommene Suspension in ein Absatzgefäß einführt, man am unteren Ende des Absatzgefäßes feststoffreichere Suspension abzieht und aus dieser das Nitrilotrisulfonat völlig abtrennt, wobei Mutterlauge anfällt. Gleichzeitig wird am oberen Ende des Absatzgefäßes eine feststoffärmere Suspension abgezogen, die nach Zugabe der Mutterlauge wieder in das Reaktionsgefäß zurückgeführt wird.

Das Reaktionsgefäß, in das die Stickoxide eingeleitet werden, enthält im allgemeinen 20 bis 800 g/l, vorzugsweise 100 bis 500 g/l festes Ammonium-nitrilo-trisulfonat. Bei einem Feststoffgehalt über 800 g/l wird die Suspension sehr breiig und sie kann nur sehr schwer gut durchmischt werden. Feststoffgehalte unter 20 g/Liter bieten zwar bereits Vorteile gegenüber der Einleitung von Nitrose in eine klare Ammoniumsulfitlösung, für eine gute Kristallbildung und ein einfaches Abtrennen des Reaktionsproduktes werden jedoch Konzentrationen über 20g/l bevorzugt. Es ist bevorzugt, wenn die mit Mutterlauge verdünnte Suspension, die wieder in das Reaktionsgefäß zurückgeführt wird, 18 bis 700 g/l festes Nitrilo-trisulfonat enthält.

Der Schwefeldioxidgehalt der Suspension im Reaktionsgefäß soll 4 bis 400g/l Suspension betragen, wobei mit "Schwefeldioxid" sowohl das in der wässrigen Phase gelöste, wie auch das als Sulfit gebundene $SO_2$ gemeint ist. Besonders bevorzugt sind $SO_2$-Gehalte von 20 bis 300 g, insbesondere 50 bis 200 g $SO_2$ pro Liter Suspension.

Der $SO_2$-Gehalt ist nach oben durch die Löslichkeit von Ammoniumsulfit und Ammoniumbisulfit in der Reaktionslösung bei der gewählten Reaktionstemperatur begrenzt. Andererseits besitzen konzentrierte Ammoniumsulfit-Lösungen eine bessere Pufferwirkung als sehr verdünnte Lösungen. Bei gleichem pH-Wert wird daher eine dünne Lösung stärker auf Schwankungen der Konzentration der Reaktanten ($NO_x$, $SO_2$) reagieren. Bei sorgfältiger Reaktionsführung ist auch bei Schwefeldioxid-Konzentrationen unter 20 g pro Liter Suspension das erfindungsgemäße Verfahren noch durchführbar. Bei sehr geringem $SO_2$-Gehalt ist es jedoch schwierig an den Einleitungsstellen der Reaktanten zu verhindern, daß der pH-Bereich von 5,0 bis 7,5, insbesondere aber der bevorzugte pH-Bereich von 6,0 bis 7,0, verlassen wird. Daher ist bei geringen $SO_2$-Gehalten intensives Rühren der Suspension im Reaktionsgefäß von Vorteil.

Bei Unterschreitung des pH-Bereiches von 5 bis 7,5 wird die Hydrolyse, die gemäß den folgenden Gleichungen verläuft,

$$N(SO_3NH_4)_3 + H_2O \longrightarrow NH(SO_3NH_4)_2 + NH_4HSO_4$$

$$NH(SO_3NH_4)_2 + H_2O \longrightarrow NH_2SO_3NH_4 + NH_4HSO_4$$

immer rascher verlaufen. Bei besonders kleiner Pufferkapazität ist es sogar möglich, daß die Zersetzung durch die bei der Hydrolyse gebildeten Protonen autokatalytisch beschleunigt wird und die Suspension unter Erwärmung und Verschwinden des Nitrilotrisulfonats in eine klare Lösung übergeht.

Die Reaktion läßt sich leicht kontinuierlich durchführen, wenn bei vorgegebener $SO_2$-Einleitgeschwindigkeit die Nitrose-Einleitung so geregelt wird, daß der $SO_2$-Gehalt annähernd konstant ist, und die Zugabe von Schwefeldioxid und Ammoniak über den pH-Wert, vorzugsweise automatisch, gesteuert wird. Bei Absinken des pH-Wertes unter eine vorgegebene Grenze wird Ammoniak oder Ammoniakwasser in den Reaktionsbehälter oder die umgepumpte

Suspension eindosiert. Die Bestimmung des $SO_2$-Gehaltes kann einfach durch jodometrische Titration erfolgen.

Wegen der leichten Regelungsmöglichkeit kann man auch sehr verdünntes Ammoniak, Schwefeldioxid oder Stickoxid einsetzen, wie sie beispielsweise in Abgasen anfallen. Gegebenenfalls können auch ammoniak- oder schwefeldioxidhaltige Abwässer Verwendung finden. Dabei können zeitliche Schwankungen der Gaskonzentration ohne weiteres in Kauf genommen werden.

Eine Möglichkeit, das erfindungsgemäße Verfahren durchzuführen sei anhand des Fließschemas dargestellt.

Die Apparatur besteht im wesentlichen aus einer senkrecht angeordneten Blasensäule (10) mit Kühlschlange (25), Rohrleitungen für die Abnahme und Rückführung von Suspension und einer Einrichtung zum Abziehen von feuchtem Nitrilotrisulfonat. Bei kurzen Reaktionszeiten und niedrigen Belastungen sind zur Absorption auch Kolonnen einsetzbar.

Die Blasensäule (10) wird zu Beginn der Reaktion mit Wasser oder Ammoniumsulfit-Lösung gefüllt. Diese Lösung wird am Boden der Säule (10) durch Leitung (2) entnommen und durch Pumpe (3) und Leitung (4) am oberen Ende der Blasensäule wieder aufgegeben. Die Zugabe von $SO_2$ erfolgt über Leitung (6) und Ventil (7), von Ammoniak über Leitung (8) und Ventil (9). Ventil (9) ist so lange geöffnet, bis der pH-Wert, gemessen am Meßgerät (11) eine vorgegebene Grenze erreicht hat. Der Durchfluß wird mit dem Strömungsmesser (12), die Temperatur durch das Thermometer (13) kontrolliert. Meßgerät (11) regelt über die pneumatische Leitung (27) das Ventil (9).

Nach Erreichen des vorgegebenen pH-Wertes und der vorgegebenen $SO_2$-Konzentration wird in die umgepumpte Flüssigkeit am Fuß der Säule (10) durch Leitung (5)

stickoxidhaltiges Gas ($NO_x$) eingeleitet. Inerte Gase (beispielsweise Stickstoff, Argon oder Sauerstoff) verlassen die Kolonne (10) am Kopf durch Leitung (14). Wenn sich in der Sulfitlösung ausreichende Mengen festes Nitrilotrisulfonat gebildet haben, wird durch Öffnen von Ventil (15) und Drosseln von Ventil (16) ein Teil der Suspension (1) über Leitung (18) abgezweigt und durch die Nutsche (oder Zentrifuge) (17) von festem Nitrilotrisulfonat befreit. Der Nutschkuchen (19) wird von der Nutsche entfernt; die Mutterlauge wird über Leitung (20) wieder mit der nicht filtrierten Suspension von Leitung (2) vereinigt. Nach längeren Reaktionszeiten kann durch Schließen des Ventils (26) und Öffnen des Ventils (21) über Leitung (22) Mutterlauge ausgeschleust werden. Gleichzeitig wird in diesem Fall durch Ventil (23) über Leitung (24) Frischwasser oder frische Ammoniumsulfit-Lösung zudosiert.

Bei der Aufgabe der Suspension (1) am oberen Ende der Blasensäule wird die Kühlschlange (25) teilweise berieselt, ohne daß es zu einem Anbacken von Nitrilotrisulfonat kommt.

Das zu Beginn der Reaktion ausfallende Nitrilotrisulfonat ist sehr rein. Mit zunehmender Reaktionsdauer wird jedoch auch die Konzentration der Nebenprodukte größer. Hierbei handelt es sich insbesondere um das Ammoniumsalz der Imidodisulfonsäure, um Ammoniumbisulfat und Ammoniumsulfat. Die Verunreinigungen fallen teilweise zusammen mit dem Nitrilotrisulfonat aus. Nach einiger Zeit stellt sich ein stationärer Zustand ein, bei dem die Produktzusammensetzung des Feststoffes konstant bleibt. Dieser enthält aber stets einen hohen Anteil an Nitrilotrisulfonat. Wenn die Kristallisation von reinem Nitrilotrisulfonat gewünscht wird, so soll Mutterlauge, bevorzugt über Leitung (22), ausgeschleust werden. Diese Mutterlauge ist relativ arm an gelöstem Nitrilotrisulfonat. Das Flüssigkeitsvolumen in der Reaktionsapparatur

wird durch Zugabe von Wasser oder Ammoniumsulfitlösung konstant gehalten.

Mit dem Inertgas, das die Blasensäule (10) durch Leitung (14) verläßt, werden auch wässrige Nebel ausgetragen, die Ammoniumsalze (insbesondere Ammoniumnitrat und Ammoniumsulfat) enthalten. Diese Nebel können nach bekannten Verfahren abgeschieden werden. Die dabei anfallenden Salzlösungen werden vorteilhafterweise ausgeschleust und z.B. auf Nitratdünger verarbeitet.

Das nach dem erfindungsgemäßen Verfahren hergestellte Ammonium-nitrilo-trisulfonat kann nach der Filtration mit wenig Wasser, sehr verdünnter wässriger Ammoniaklösung und einem mit Wasser mischbaren organischen Lösungsmittel (wie z.B. Azeton) gewaschen und anschließend getrocknet werden. Dabei ist es günstig, das Produkt sofort nach der Filtration, gegebenenfalls im Vakuum, zu trocknen.

Ammonium-nitrilo-trisulfonat läßt sich wie die entsprechenden Alkalimetallsalze der Nitrilotrisulfonsäure als Builder in Waschmittel einsetzen. Ferner kann man das Nitrilotrisulfonat unter Druck und bei erhöhter Temperatur durch Ammonolyse in Ammoniumsulfamat überführen, das eine Vorstufe von Amidosulfonsäure darstellt.

Die Erfindung wird durch das folgende Beispiel näher erläutert.

Beispiel

Zur Absorption benutzt man die anhand des Fließschemas bereits schematisch dargestellte Apparatur. Sie hat ein Volumen von 20 l (Blasensäule ca. 7 l) und ist mit 15 l verdünnter Ammoniumsulfitlösung gefüllt. Die Lösung wird durch die Apparatur mit einer Geschwindigkeit von 1000 l/ Stunde gepumpt. Durch Einleitung von Ammoniak und Schwefeldioxid wird der pH-Wert zunächst auf 6,7 und der $SO_2$-Gehalt auf 143 g/l eingestellt. Das pH-Meter steuert die Ventile für die Ammoniak- und die Schwefeldioxid-Einleitung. Während des gesamten Versuchs liegt der pH-Wert zwischen 6,5 und 6,9. Auf diese Weise werden stündlich 0,9 bis 1,1 kg Ammoniak, 2,5 bis 3,0 kg Schwefeldioxid sowie 2,5 bis 3,5 $m^3$ nitrose Gase (Gehalt an $NO_x$ ca. 10 %, Rest Luft)eingeleitet . Der $SO_2$-Gehalt in der Suspension wird etwa jede halbe Stunde durch jodometrische Titration bestimmt. Danach ergeben sich Werte zwischen 100 und 170 g $SO_2$/l.

Zu Beginn der Reaktion weist die Ammoniumsulfitlösung eine Dichte von 1,1 g/ml auf. Nach längeren Reaktionszeiten steigt die Dichte auf Werte von 1,33 bis 1,35 (für die vom Feststoff befreite klare Lösung). Die Temperatur wird durch Kühlung bei 48 bis 52°C gehalten. Etwa 25 Minuten nach Beginn der Einleitung der nitrosen Gase beginnt das Ammoniumsalz der Nitrilotrisulfonsäure in reiner Form auszukristallisieren. Mit zunehmendem Feststoffgehalt wird die Suspension breiiger. Sobald der Feststoffgehalt 450 g/l (Dichte der Suspension 1,465 g/ ml) erreicht hat, werden stündlich etwa 10 l Suspension abgeführt und im Vakuum filtriert. Die Mutterlauge wird zurückgeführt, der Feststoff im Vakuum getrocknet, wobei zusammen mit dem Wasser auch flüchtige Ammoniumsalze abgetrennt werden.

Der anfallende Feststoff enthält neben Nitrilotrisulfonat geringe Mengen anderer Ammoniumsalze. Bei der Abscheidung der wässrigen Salznebel, die am Kopf der Kolonne ausgetragen werden, fällt eine Lösung an, die in der Hauptsache Ammoniumnitrat und Ammoniumsulfat enthält (Gehalt pro Liter: 159 g $NO_3^-$, 159 g $SO_4^{--}$ und 100 g $NH_4^+$). Es ist daher notwendig, mehr Wasser, als nach der Bildungsgleichung zu erwarten wäre, der Suspension zuzuführen, um das Flüssigkeitsniveau konstant zu halten.

Innerhalb 11,6 Stunden wurden aus 11,4 kg Ammoniak, 32 kg Schwefeldioxid, 26 l Wasser und 33,3 $m^3$ nitrosen Gasen 48,5 kg Ammonium-nitrilo-trisulfonat hergestellt.

PATENTANSPRÜCHE:

1. Verfahren zur Herstellung von Ammonium-nitrilotrisulfonat durch Einleiten von Stickoxyden in eine wäßrige Ammoniumsulfit-Lösung bei pH-Werten von 5,0 bis 7,5 dadurch gekennzeichnet, daß man die Stickoxide in eine Lösung einleitet, die in suspendierter Form bereits mindestens 20 g/l Nitrilotrisulfonat enthält.

2. Verfahren nach Anspruch 1, dadurch gekennzeichnet, daß man das ausgefallene Nitrilotrisulfonat in dem Maß aus der Suspension entfernt, wie es neu gebildet wird.

3. Verfahren nach Anspruch 2, dadurch gekennzeichnet, daß man kontinuierlich Suspension entfernt, daraus das feste Nitrilotrisulfonat ganz oder teilweise abtrennt und die Mutterlauge ganz oder teilweise in das Reaktionsgefäß zurückführt.

4. Verfahren zur Herstellung von Ammonium-nitrilotrisulfonat durch Einleiten von Stickoxiden in eine wäßrige Ammoniumsulfit-Lösung bei pH-Werten von 5,0 bis 7,5, die in suspendierter Form bereits Nitrilotrisulfonat enthält, wobei man kontinuierlich Suspension aus dem Reaktionsgefäß entnimmt, man von einem Teil der entnommenen Suspension das ausgefallene Nitrilotrisulfonat vollständig entfernt, dadurch gekennzeichnet, daß man die entstehende Mutterlauge vollständig oder teilweise mit dem restlichen Teil der entnommenen Suspension vereint und anschließend wieder in das Reaktionsgefäß zurückführt.

5. Verfahren nach Anspruch 1 oder 4, dadurch gekennzeichnet, daß man kontinuierlich frische Ammoniumsulfit-Lösung in dem Maße nachsetzt oder neues Ammoniumsulfit in der Suspension erzeugt, wie Ammoniumsulfit durch die Reaktion verbraucht wird.

6. Verfahren nach Anspruch 4, dadurch gekennzeichnet, daß man die entnommene Suspension in ein Absetzgefäß einführt, man am unteren Ende des Absetzgefäßes feststoffreichere Suspension abzieht, aus dieser Nitrilotrisulfonat völlig abtrennt, wobei Mutterlauge zurückbleibt, man am oberen Ende des Absetzgefäßes eine feststoffärmere Suspension abzieht und diese nach Zugabe von Mutterlauge wieder in das Reaktionsgefäß zurückführt.

7. Verfahren nach Anspruch 4, dadurch gekennzeichnet, daß die Suspension im Reaktionsgefäß mindestens 1 g/l festes Nitrilotrisulfonat enthält.

8. Verfahren nach Anspruch 1 oder 7, dadurch gekennzeichnet, daß die Suspension 20 bis 800 g/l festes Nitrilotrisulfonat enthält.

9. Verfahren nach Anspruch 8, dadurch gekennzeichnet, daß die Suspension 100 bis 500 g/l festes Nitrilotrisulfonat enthält.

10. Verfahren nach Anspruch 4 und 8, dadurch gekennzeichnet, daß man die Menge der nicht von Nitrilotrisulfonat befreiten Suspension und die Menge der damit vereinten Mutterlauge so bemißt, daß in der in das Reaktionsgefäß zurückgeführten Suspension 18 bis 700 g/l festes Nitrilotrisulfonat enthalten sind.

11. Verfahren nach Anspruch 1 oder 4, dadurch gekennzeichnet, daß die Suspension 4 bis 400 g/l freies und gebundenes Schwefeldioxyd enthält.

12. Verfahren nach Anspruch 1 oder 4, dadurch gekennzeichnet, daß die Stickoxyde in eine Lösung eingeleitet werden, die eine Temperatur von 0 bis 80°C aufweist.

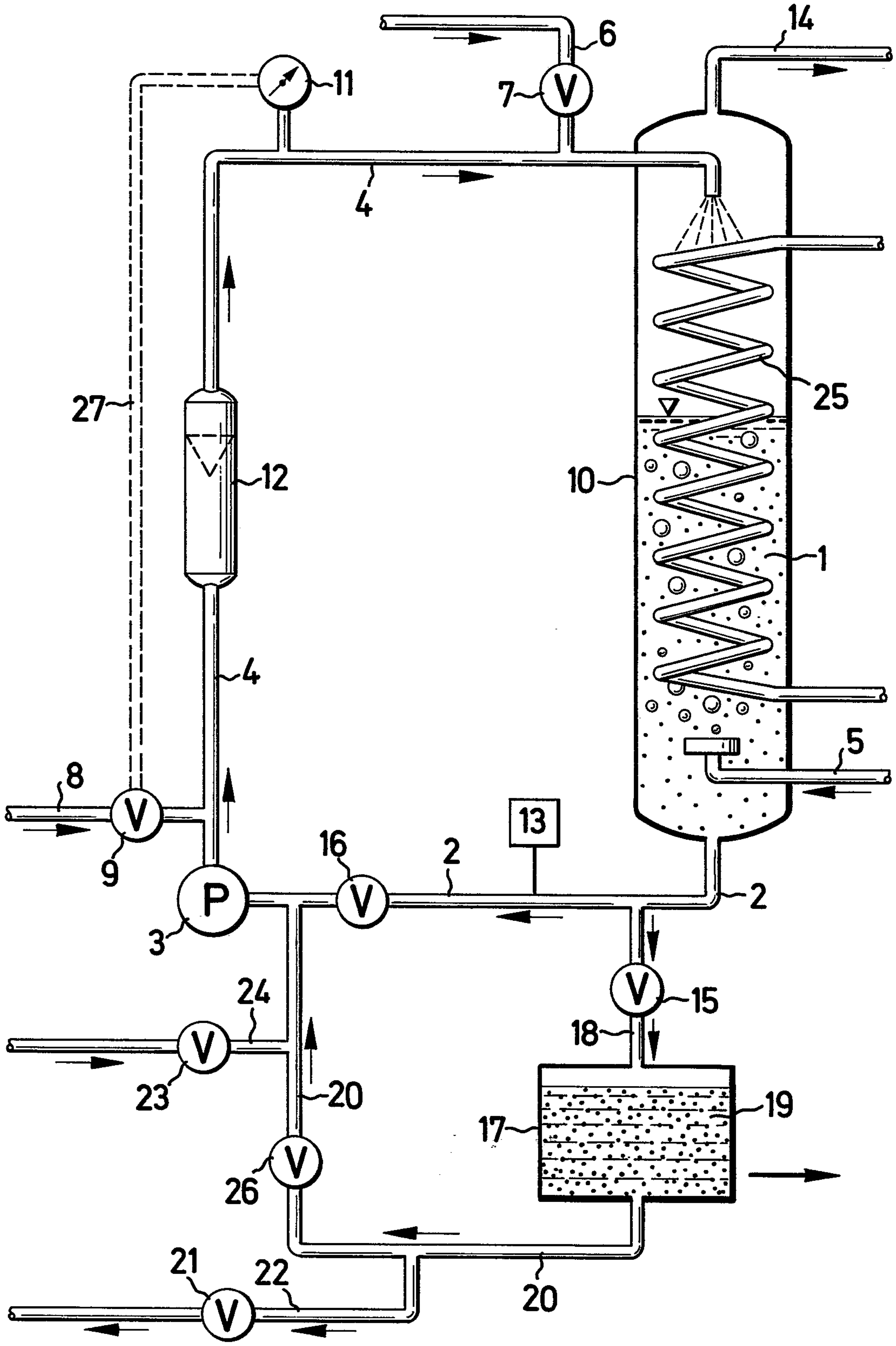

14
6
11
7
V
4
25
27
12
10
1
4
5
8
V
9
13
16
2
P
V
2
3
V
15
24
18
V
23
20
19
17
V
26
21
22
V
20

Europäisches Patentamt

# EUROPÄISCHER RECHERCHENBERICHT

EP 81 10 3256.4

| Kategorie | EINSCHLÄGIGE DOKUMENTE — Kennzeichnung des Dokuments mit Angabe, soweit erforderlich, der maßgeblichen Teile | betrifft Anspruch | KLASSIFIKATION DER ANMELDUNG (Int. Cl.3) |
|---|---|---|---|
| P | EP - A1 - 0 016 430 (HOECHST AG)<br>* ganzes Dokument *<br>-- | 1,4,12 | C 01 B 21/093 |
| P | Patents Abstracts of Japan, Band 4, Nr. 89, 25. Juni 1980<br>Seite 32C16<br>& JP - A - 55 - 51705<br>-- | 1,4,12 | |
| D | DE - B2 - 1 767 201 (HOECHST AG)<br>* Anspruch 1 *<br>-- | 1,4,12 | RECHERCHIERTE SACHGEBIETE (Int. Cl.3) |
| A | DE - B2 - 1 915 723 (HOECHST AG)<br>-- | | C 01 B 21/082<br>C 01 B 21/087<br>C 01 B 21/093<br>C 01 B 21/096 |
| A | CH - A - 273 389 (SPOLED PRO CHEMICKOU A HUTNI VÝROBU)<br>-- | | |
| A | CH - A - 307 961 (AMERICAN CYANAMID CO.)<br>---- | | |

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Berlin | 02-07-1981 | ASSOGNA |